# DEMANDE DE BREVET EUROPEEN

(11) **EP 1 174 404 A2**
(43) Date de publication de la demande: **23.01.2002**
(21) Numéro de dépôt: 01390007.1
(22) Date de dépôt: 18.07.2001
(51) Int. Cl.: C05F 5/00, C05F 11/00, C05G 3/00, B01J 2/28

(54) **Procédé et installation de fabrication de granules d'engrais à forte teneur en matières organiques et granules d'engrais sphériques**

(30) Priorité: 18.07.2000 FR 0009391
(71) Demandeur: SA Fabries-Amiflor, 81500 Lavaur (FR)
(72) Inventeur: Fabries, Jean-Michel, 81500 Lavaur (FR)
(74) Mandataire: Ravina, Bernard

(57) **Abrégé**

Le procédé de fabrication d'un engrais à très forte teneur en matière organique se présentant sous forme de granules sphériques de faible diamètre est remarquable notamment en ce qu'il consiste :
- à réaliser une masse pulvérulente d'une au moins matière organique sèche,
- à brasser cette masse pulvérulente,
- et pendant l'opération de brassage à introduire dans cette masse un liant organique liquide.
- et poursuivre l'opération de brassage après pulvérisation, la durée de cette opération déterminant la grosseur des granules formés.

La présente invention est relative également à une installation pour la mise en oeuvre du procédé et ainsi qu'à des granules d'engrais. Chaque granule de forme sphérique est remarquable notamment en ce qu'il est revêtu d'une couche de liant organique par exemple une vinasse sèche de jus de betterave.

## Description

La présente invention a pour objet un procédé et une installation de fabrication de granules sphériques d'engrais, non compactés composés en totalité ou en partie par de la matière organique et une installation à cet effet. La présente invention a également pour objet des granules d'engrais.

On connaît de l'état de la technique des engrais organiques se présentant sous forme de bouchon cylindrique. Pour assurer une cohésion mécanique des éléments composant les bouchons, ces derniers sont obtenus par compactage. On obtient ainsi des bouchons de faibles dimensions, et de dureté élevée. Il est apparu que ce type d'engrais sous forme de bouchons compactés ne présente pas une bonne aptitude à absorber l'humidité et pour cette raison se délite trop lentement. Les substances nutritives que comporte le bouchon ne migrent pas dans le sol avec la rapidité souhaitée et ainsi on observe à proximité immédiate de chaque bouchon des zones fortement fertilisées et ailleurs des zones pauvrement fertilisées. Il s'ensuit un effet dit de « tigrage » c'est-à-dire une croissance non uniforme de la plantation. Pour prévenir cet effet il est connu de sur-doser la quantité d'engrais apportée au sol. On sait qu'une telle façon de faire est coûteuse et présente des inconvénients majeurs tel que par exemple la pollution des nappes d'eau souterraine.

L'effet de « tigrage » résulte aussi de la forme cylindrique que présentent les bouchons. Cette forme ne permet pas une diffusion uniforme des substances nutritives d'une part et ne permet pas un épandage uniforme sur le sol d'autre part. Une diffusion et un épandage uniformes sont obtenus avec des granules sphériques. Cependant on ne sait pas obtenir des engrais organiques sous forme de granules sphériques, le compactage du granule en lui conservant sa forme sphérique étant impossible à effectuer avec des coûts de fabrication raisonnables. Ainsi pour assurer la cohésion des granules sphériques, la matière organique est mélangée à de la matière minérale. L'inconvénient d'une telle façon d'opérer est que la proportion de matières organiques dans de tels granules demeure faible.

Le but de la présente invention est la mise en oeuvre d'un procédé de fabrication d'engrais sous forme de granules sphériques non compactés à très forte teneur en matières organiques.

À cet effet le procédé selon l'invention, de fabrication d'un engrais à très forte teneur en matière organique se présentant sous forme de granules sphériques de faible diamètre se caractérise essentiellement en ce qu'il consiste :
- à former une masse finement divisée d'au une moins matière organique sèche,
- à brasser cette masse finement divisée en vue de l'homogénéiser,
- ensuite, après homogénéisation, à poursuivre le brassage et simultanément introduire dans la masse finement divisée, un liant organique liquide,
- ensuite, après pulvérisation, poursuivre l'opération de brassage, la durée de cette opération déterminant la grosseur des granules formés.

Les granules sphériques peuvent être formés à partir d'une seule matière organique mais de préférence, selon un autre aspect de l'invention, sont utilisées des matières organiques de différentes natures. Ces matières organiques se présenteront sous une forme pulvérulente ou finement divisée. Ces matières pourront être des déchets organiques de différentes provenances ; végétale et autres.

Selon un autre aspect de l'invention, le liant liquide est une vinasse de jus de betterave. On utilise donc en tant que liant une matière organique riche en azote, phosphore et potassium. Ainsi cette vinasse, outre ces qualités de liant, apporte aux granules d'engrais une quantité non négligeable d'éléments fertilisants additionnels ce qui renforce avantageusement les effets d'un tel engrais.

Préférentiellement, selon un autre aspect de l'invention, le brassage est obtenu par roulage de la masse de matières organiques sur elle-même. On obtient ainsi de manière simple une excellente homogénéisation du mélange des différents constituants organiques.

Selon un autre aspect de l'invention, l'introduction dans la masse de matières organiques du liant liquide, consiste à pulvériser ce liant sur ladite masse. Préférentiellement cette pulvérisation s'effectuera sous forme de jets en pluie. Cette caractéristique combinée au brassage par roulage permet la réalisation rapide d'un mélange homogène de matières sèches et de vinasse. De plus les effets combinés du roulage et du pouvoir agglomérant que présente la vinasse de jus de betterave permettent d'amorcer la formation des granules. À ce stade du procédé, la taille des granules, matérialisée par leurs diamètres, dépend de la durée du brassage après pulvérisation de la vinasse ; à une durée longue correspond des granules de diamètre relativement important.

À l'issue du brassage, on obtient une pâte molle, humide, composée de granules préformés agglomérés les uns aux autres. L'étape suivante du procédé consiste à séparer les granules les uns des autres et les arrondir. Dans ce dessein, le procédé selon un autre de ses aspects, consiste en une seconde opération de brassage du produit par mouvement ascendant et descendant combiné à un roulage dudit produit sur lui-même.

À l'issue de cette opération de séparation, le procédé consiste à densifier les granules, cette densification s'opérant par séchage en surface et roulage des granules sur eux-mêmes. L'action mécanique du roulage, la compression mécanique que subissent les granules lors de ces mouvements de roulage et le séchage en surface conduisent à une réduction du diamètre des granules et en la formation d'une croûte superficielle qui reste perméable. Un autre effet du roulage est de conserver la forme sphérique des granules.

Lors de cette opération de densification, les parties fines cristallines qui n'ont pas absorbées la vinasse, sont agglomérées les unes aux autres. En outre cette densification permet d'exprimer une partie du liant vers la surface sphérique du granule. Ce liant une fois sec confère au granule un état de surface particulièrement lisse apte à diminuer le coefficient de frottement grâce à quoi est obtenu un engrais possédant d'excellentes qualités d'écoulement et de fluidité qui autorisent une utilisation aisée dans des machines d'épandage. En outre, l'enrobage hygroscopique que constitue le liant confère au granule une vitesse élevée de délitage, les observations menées prouvent que de tels granules peuvent se déliter en l'espace de 24 heures.

À l'issue de l'opération de densification, les granules sont encore humides à coeur, les étapes suivantes du procédé consistent à les sécher. Préférentiellement, selon un autre aspect du procédé, le séchage est opéré de manière étagée.

La présente invention a également pour objet une installation pour la mise en oeuvre du procédé selon l'invention.

Ainsi l'installation pour la fabrication d'un engrais organique se présentant sous la forme de granules sphériques se caractérise essentiellement en ce qu'elle comprend :
- un mélangeur à cuve, en relation avec un dispositif de délivrance des différents ingrédients entrant dans la composition de l'engrais, la cuve dudit mélangeur étant pourvue d'une ouverture avec trappe d'obturation utilisable pour l'introduction des produits à mélanger et l'extraction du mélange réalisé, ledit mélangeur étant pourvu de plus d'une rampe d'aspersion laquelle est en relation avec un circuit de distribution d'une vinasse de jus de betterave,
- un dispositif de séparation des granules par brassage, disposé en aval du mélangeur à cuve, ce dispositif de séparation étant constitué par une cuve tournante comportant une bouche d'entrée du produit à brasser et une bouche de sortie du produit brassé, ladite cuve étant pourvue de saillies longitudinales, angulairement espacées, formant des crans de préhension du produit granulaire lequel par ces saillies est prélevé par fraction dans la cuve à un niveau inférieur et est élevé à un niveau supérieur selon lequel l'inclinaison des saillies force son écoulement gravitaire vers le niveau inférieur,
- au moins un dispositif densificateur disposé en aval du dispositif de séparation, ce dispositif densificateur étant constitué par une cuve entraînée en rotation selon son axe longitudinal de symétrie, comportant une bouche d'entrée du produit à densifier et une bouche de sortie du produit densifié, la dite cuve comportant des saillies internes formant crans de préhension le dispositif densificateur pouvant être associé à un moyen de production d'un flux d'air et de propulsion de cet air chaud dans la cuve depuis la bouche d'entrée vers la bouche de sortie,
- au moins une enceinte de séchage réalisant un séchage étagé du produit granulaire, ladite enceinte comportant une bouche d'entrée du produit à sécher et une bouche de sortie du produit séché.

Selon une autre caractéristique de l'invention, la cuve du mélangeur est fixe et ledit mélangeur est doté d'un organe de mélange constitué par un arbre rotatif, axial à la cuve, interne à cette dernière, accouplé à un organe moteur d'entraînement, ledit arbre, dans la cuve, étant doté d'une série de pales portées par des bras radiaux et destinées, par rotation de l'arbre, à pénétrer dans le produit et mélanger ce dernier par brassage, ledit mélangeur étant doté de plus dans la cuve d'une rampe de pulvérisation connectée à un circuit de délivrance d'une vinasse de jus de betterave.

Selon une autre caractéristique de l'invention, une trémie tampon est disposée entre le dispositif de délivrance des produits à mélanger et le mélangeur à cuve.

Selon une autre caractéristique de l'invention, le dispositif de délivrance du produit en vrac comprend au moins une enceinte de stockage de ce produit pourvue d'une bouche d'extraction du produit équipée d'un organe de distribution et une trémie peseuse dans laquelle s'écoule le produit délivré par l'organe de distribution en vue d'y être pesé avant introduction dans la trémie tampon.

Selon une autre caractéristique de l'invention, la cuve du dispositif de séparation, la cuve du dispositif densificateur et la cuve de l'enceinte de séchage sont inclinées vers le bas depuis la bouche d'entrée du produit granulaire de façon que ledit produit puisse s'écouler par gravité de la bouche d'entrée vers la bouche de sortie.

D'autres buts, avantages et caractéristiques de l'invention apparaîtront à la lecture de la description d'une forme préférée de réalisation, en se référant aux dessins annexés en lesquels :

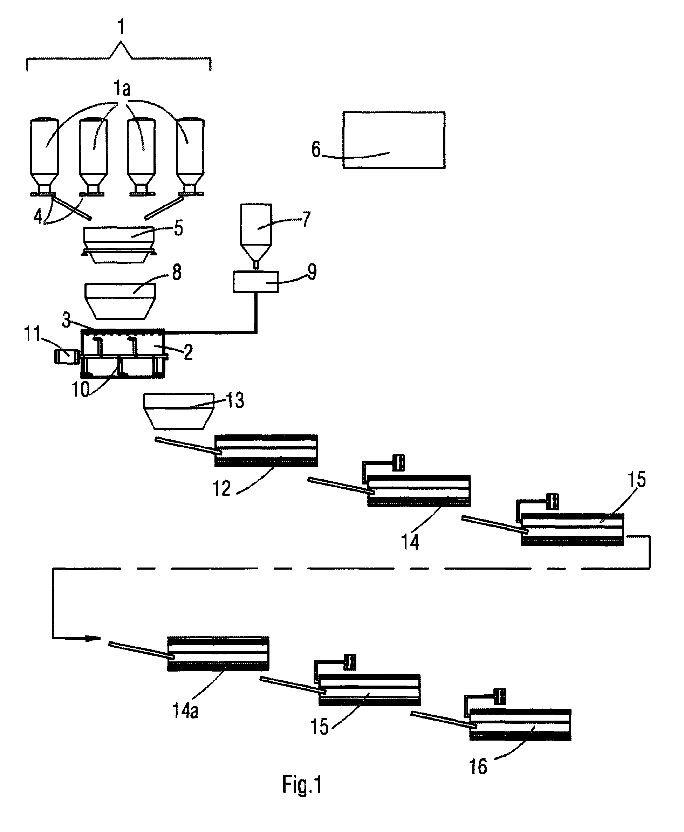

- la figure 1 est une vue schématique d'une installation selon l'invention.

Les matières organiques entrant dans la composition de l'engrais sont préalablement entreposées sur plusieurs aires de stockage séparées les unes des autres et parfaitement différenciées et peuvent se présenter sous une forme compacte ou fragmentaire ou bien pulvérulente. Pour diviser ces matières et former des particules d'une taille de 300 à 600 microns est prévu un broyeur d'un type connu. Après broyage, les matières organiques sont véhiculées vers un ensemble de stockage et de délivrance 1 apte à délivrer à la commande des quantités pondérales contrôlées de matières organiques à un mélangeur 2.

L'ensemble de stockage et de délivrance 1 comprend plusieurs enceintes 1a de stockage des différentes matières organiques. Chaque enceinte 1a est pourvue d'une bouche supérieure d'introduction de la matière organique et d'une bouche inférieure d'extraction de cette matière. Cette bouche d'extraction est équipée d'un organe de distribution 4 constitué par exemple d'une vis sans fin d'extraction et d'un moteur d'entraînement en rotation de ladite vis. Selon la forme préférée de réalisation, l'ensemble de stockage comprend de plus une trémie peseuse 5 dans laquelle peuvent s'écouler par gravité les différentes matières organiques extraites des différentes trémies de stockage 1a et entrant dans la composition de l'engrais à réaliser. Cette trémie peseuse 5 comporte un organe de pesage apte à délivrer sous forme d'un signal électrique à une unité centrale de contrôle et de commande 6, une valeur représentative du poids de la matière contenue dans la trémie. Cette unité centrale 6, contrôle et commande également le fonctionnement de l'organe de distribution 4 de chaque enceinte de stockage 1a. Il est donc possible par ce biais, ainsi que par le pesage, de contrôler la valeur pondérale de chaque matière organique entrant dans la composition de l'engrais.

La trémie peseuse est équipée d'une trappe d'évacuation de son contenu vers le mélangeur 2. Ce mélangeur comporte une cuve pourvue d'une ouverture avec trappe d'obturation utilisable pour l'introduction des produits à mélanger et l'extraction du mélange réalisé. Ce mélangeur 2 est pourvu de plus d'une rampe d'aspersion 3 en relation avec un circuit de distribution d'une vinasse de jus de betterave. Après introduction des différentes matières dans la cuve du mélangeur 2, est réalisé un mélange intime de ces dernières. Ensuite, une vinasse de jus de betterave est pulvérisée sur le mélange de matières organiques sèches en vue de les lier d'une part et de réaliser une pré-granulation d'autre part.

Le circuit de distribution de la vinasse d'un jus de betterave, est constitué par une enceinte 7 étanche, de stockage, pourvue d'un orifice de délivrance du produit associé à un organe de délivrance 8 qui peut être une électrovanne. Cette électrovanne est avantageusement pilotée par l'unité de contrôle et de commande 6 de façon à contrôler la quantité de vinasse, délivrée à la rampe d'aspersion.

De préférence est prévue une trémie tampon 8 entre la trémie pesage du dispositif de délivrance des matières à mélanger et le mélangeur à cuve 2. De même le circuit de délivrance de la vinasse de jus de betterave comprend une trémie tampon 9, cette trémie tampon étant utilisable pour l'alimentation de la rampe de pulvérisation. Ainsi est simulée une fabrication en continu. Pendant qu'une opération de mélange et de pré-granulation s'accomplit dans le mélangeur à cuve 2, une masse de matières à mélanger est en attente dans la trémie tampon 8 et un chargement et un pesage des matières organiques sont opérés dans la trémie de pesage 5. De plus après introduction de la vinasse de jus de betterave dans le mélangeur 2, une nouvelle quantité de vinasse est introduite dans la trémie tampon 9.

Préférentiellement, la cuve du mélangeur est fixe et ce mélangeur est doté d'un organe de mélange 10 constitué par un arbre rotatif, axial à la cuve, interne à cette dernière, accouplé à un organe moteur d'entraînement 11. Cet arbre, dans la cuve, est doté d'une série de pales portées par des bras radiaux destinées, par rotation de l'arbre, à pénétrer dans le produit et mélanger ce dernier. L'organe moteur d'entraînement de l'arbre est piloté par l'unité centrale de commande 6.

La pulvérisation de la vinasse de jus de betterave est opérée une fois le mélange réalisé, l'organe de mélange 10 étant pendant et après cette pulvérisation entraîné en rotation pendant un temps suffisant pour obtenir d'une part un mélange intime des matières sèches avec la matière liquide et d'autre part, pour amorcer la formation des granules. On obtient en sortie du mélangeur un agglomérat constitué par des granules préformés.

En aval du mélangeur est disposé un dispositif 12 de séparation des granules par brassage, ce dispositif de séparation étant constitué par une cuve tubulaire, rotative selon son axe longitudinal de symétrie. Cette cuve comporte une bouche d'entrée du produit à brasser et une bouche de sortie du produit brassé, ces deux bouches étant ménagées à chacune de ses extrémités. La cuve est pourvue de saillies longitudinales, radiales, internes, angulairement espacées de manière régulière, formant crans de préhension. Par le mouvement de rotation de la cuve, chaque saillie prélève à un niveau inférieur une fraction de la masse de produit présente dans ladite cuve, et élève cette fraction à un niveau supérieur. Au cours de ce mouvement d'élévation, les saillies passent progressivement d'une position inférieure d'inclinaison vers le haut, et donc de rétention du produit, vers une position supérieure d'inclinaison vers le bas qui force l'écoulement gravitaire des produits vers la partie inférieure de la cuve. Il y a lieu de noter que la vitesse de rotation de la cuve est suffisamment faible pour éviter le maintien du produit contre la paroi de la cuve sous l'effet de la force centrifuge.

Les saillies sont suffisamment écartées les unes des autres pour permettre un roulage du produit sur lui-même dans la partie inférieure de la cuve. De plus, du fait de l'écoulement gravitaire du produit depuis la zone supérieure vers la zone inférieure est obtenu aussi un roulage du produit sur lui-même. Ces différents mouvements de roulage conduisent d'abord à la désolidarisation des granules les uns des autres. Ensuite, grâce à ces mouvements, les granules acquièrent leur forme sphérique.

Avantageusement, chaque saillie est constituée par une cornière, une des ailes de la cornière étant radiale à la cuve.

La cuve du dispositif de séparation est montée sur des paliers d'extrémités et sur des paliers intermédiaires. Cette cuve est accouplée à un organe moteur piloté et contrôlé par l'unité de commande 6. Par contrôle du moteur, on contrôle aussi la vitesse de rotation de la cuve.

Pour forcer l'écoulement gravitaire du produit dans le dispositif de séparation 12, la cuve est inclinée vers le bas depuis la bouche d'entrée du produit vers la bouche de sortie. De préférence, l'inclinaison est limitée à quelques degrés de façon que la vitesse de progression du produit dans la cuve soit relativement lente.

Avantageusement une trémie tampon 13 est disposée entre le mélangeur 2 et le dispositif de séparation 12 pour les mêmes raisons que celles précédemment énoncées. Ainsi le produit, en sortie de mélangeur est mis en attente dans cette trémie le temps que dure la séparation en cours dans le dispositif 12.

En aval du dispositif de séparation est disposé le densificateur 14. Ce dispositif densificateur 14 est constitué par une cuve tubulaire, rotative selon son axe longitudinal de symétrie. Cette cuve comporte une bouche d'entrée du produit à densifier et une bouche de sortie du produit densifié, pratiquées respectivement à une extrémité et à l'autre. Cette cuve comporte une pluralité de saillies internes, formant des godets pour la préhension et le brassage du produit. Préférentiellement, chaque saillie ou godet se présente sous la forme d'un secteur sphérique spiralé. Ainsi, le produit granulaire est prélevé par fractions, par ces saillies ou godets, à un niveau inférieur et par rotation de la cuve, est amené à un niveau supérieur selon lequel l'inclinaison des godets vers le bas de la cuve force l'écoulement gravitaire du produit vers le bas. Il y a lieu de noter que le produit s'écoule en roulant sur lui-même. De cet effet de roulage, qui se produit tant au niveau inférieur de la cuve qu'entre le niveau supérieur et le niveau inférieur lorsque le produit retombe, est obtenue une diminution du diamètre des granules et donc une densification. De manière concomitante au roulage et au brassage du produit est réalisé un préséchage des granules de façon à obtenir un durcissement superficiel de ces dernières. À cet effet, le dispositif densificateur 14 est associé à un moyen de production d'air chaud sec et de propulsion de cet air chaud dans la cuve depuis la bouche d'entrée de cette dernière vers la bouche de sortie. On conçoit que le produit en retombant est amené à traverser le flux d'air pulsé dans la cuve et à se sécher à son contact.

La cuve du densificateur est montée en rotation sur deux paliers d'extrémité et sur un jeu de paliers intermédiaires. La cuve du densificateur 14 est accouplée à un organe moteur d'entraînement piloté et contrôlé par l'unité de commande 6. Il est donc possible par ce biais de contrôler la vitesse de rotation de la cuve ; il va de soi que cette vitesse est suffisamment faible pour éviter que le produit ne soit plaqué contre les parois de la cuve sous l'effet de la force centrifuge.

Le moyen de production d'air chaud sec est constitué par un générateur de flux d'air du genre ventilateur par exemple et par un organe de chauffage par exemple un jeu de résistances électriques disposé sur le trajet du flux d'air et ce en amont de la bouche d'entrée de la cuve du densificateur. Ce moyen est piloté et contrôlé par l'unité de commande 6. Il est donc possible de contrôler la valeur du débit d'air au travers de la cuve d'une part et sa température d'autre part.

Après densification, le produit granulaire est introduit dans une enceinte de séchage 15 constituée par une cuve tubulaire, entraînée en rotation selon son axe longitudinal de symétrie. Cette cuve comporte une bouche d'entrée du produit à sécher et une bouche de sortie du produit séché, ces deux bouches étant pratiquées en extrémités de ladite cuve. Cette cuve comporte par ailleurs des pales internes radiales, longitudinales pour brasser et aérer le produit granulaire et faciliter ainsi son séchage. Les pales sont suffisamment espacées les unes des autres pour permettre un roulage suffisant du produit, au bas de la cuve dans les intervalles qu'elles délimitent. À cette cuve, est associé un moyen de production d'un flux d'air chaud et de propulsion de ce flux d'air au travers de la cuve depuis la bouche d'entrée du produit vers la bouche de sortie. Ce moyen sera par exemple constitué par un générateur de flux d'air du genre ventilateur par exemple et par un organe de chauffage par exemple un jeu de résistances électriques disposé sur le trajet du flux d'air et ce en amont de la bouche d'entrée de la cuve de l'enceinte de séchage. Comme on le conçoit, le produit granulaire, en retombant, est amené à traverser le flux d'air chaud et se sèche à son contact.

Préférentiellement, l'enceinte est apte à réaliser un séchage étagé du produit granulaire. On obtient ainsi une montée progressive en température et on diminue le risque d'éclatement des granules.

Toujours selon la forme préférée de réalisation, la cuve de l'enceinte de séchage est montée rotative sur deux paliers d'extrémité et sur un jeu de paliers intermédiaires. La cuve est de plus accouplée à un organe moteur d'entraînement piloté et contrôlé par l'unité de commande 6. Par l'unité de commande, il est donc possible de contrôler la vitesse de rotation de la cuve ; comme dit précédemment cette vitesse est suffisamment faible pour éviter que le produit ne soit plaqué contre les parois de la cuve sous l'effet de la force centrifuge.

De même, les résistances électriques et le ventilateur sont contrôlés par l'unité de commande et de contrôle 6. Il devient donc possible de contrôler la valeur du débit d'air au travers de la cuve d'une part et sa température d'autre part.

Selon la forme préférée de réalisation sont prévues deux enceintes de séchage 15 et 16 disposées l'une à la suite de l'autre, la température de séchage dans l'enceinte amont étant inférieure à la température de séchage dans l'enceinte aval.

Entre ces deux enceintes de séchages pourra être disposé un second densificateur 14a. Ce densificateur est constitué par une cuve tubulaire, entraînée en rotation selon son axe longitudinal de symétrie, montée sur deux paliers d'extrémité et sur un ou des paliers médians. Cette cuve comporte une bouche d'entrée du produit à densifier et une bouche de sortie du produit densifié. De plus la cuve comporte une pluralité de saillies internes longitudinales, prévues pour la préhension et le brassage du produit granulaire. Préférentiellement, chaque saillie interne, se présente sous la forme d'une pale s'étendant radialement dans la cuve. Ainsi, le produit granulaire est prélevé par fraction par ces saillies à un niveau inférieur et par rotation de la cuve, est amené à un niveau supérieur selon lequel l'inclinaison des pales vers le bas de la cuve force l'écoulement gravitaire du produit vers la zone inférieure de la cuve. Il y a lieu de noter que le produit s'écoule en roulant sur lui-même. De cet effet de roulage, qui se produit tant au niveau inférieur de la cuve entre les pales qu'entre le niveau supérieur et le niveau inférieur lorsque le produit retombe, est obtenue une diminution du diamètre des granules et donc une densification. Les pales du densificateur seront suffisamment espacées les unes des autres afin de ménager un intervalle suffisant pour permettre au produit de rouler sur lui-même au bas de la cuve.

La cuve de ce densificateur 14a est montée sur deux paliers d'extrémité et sur un ou plusieurs palier(s) intermédiaire(s). Cette cuve est accouplée à un organe moteur d'entraînement en rotation piloté et contrôlé par l'unité de commande 6. Cette unité contrôle la vitesse de rotation de la cuve. Cette vitesse de rotation pourra varier afin d'accentuer plus ou moins le brassage et le roulage et donc la densification.

A cette cuve pourra être adjoint un moyen de production d'un flux d'air froid ou à température ambiante ce moyen étant apte à propulser ledit flux dans la cuve depuis la bouche d'entrée de cette dernière vers la bouche de sortie. La température de ce flux d'air sera inférieure à la température du flux d'air produit dans chaque enceinte de séchage.

Pour faciliter l'écoulement gravitaire du produit granulaire depuis leurs bouches d'entrée vers leurs bouches de sortie, les cuves des différents séparateurs, densificateurs et enceintes de séchage seront inclinés de quelques degrés vers le bas.

Après séchage, les produits granulaires sont refroidis et dépoussiérés dans une enceinte appropriée, connue en soi, avant d'être conditionnés en sacs de diverses capacités. Avant conditionnement, les produits pourront être triés par criblage par exemple afin d'extraire les granules de tailles non-commercialisables. Le déchet obtenu subira un broyage et sera introduit dans la chaîne de fabrication de l'engrais granulaire.

Le produit obtenu par application du procédé et utilisation de l'installation selon l'invention se présente sous la forme de granules de matières organiques, chaque granule étant recouverte d'une pellicule de liant sec qui confère au granule un état de surface particulièrement lisse à faible coefficient d'adhérence. On obtient ainsi un produit particulièrement fluide qui peut être utilisé dans des machines d'épandage d'engrais.

En outre tant le procédé que l'installation permettent l'obtention, au choix du fabricant, de diverses granulométries, comprises entre trois dixièmes de millimètre et un millimètre et demi.

Il va de soi que la présente invention peut recevoir tous aménagements et variantes du domaine des équivalents techniques sans pour autant sortir du cadre du présent brevet.

## Revendications

1. Procédé de fabrication d'un engrais à très forte teneur en matière organique se présentant sous forme de granules sphériques de faible diamètre **caractérisé en ce qu'**il consiste :
- à réaliser une masse pulvérulente d'une au moins matière organique sèche,
- à brasser cette masse pulvérulente,
- et pendant l'opération de brassage à introduire dans cette masse un liant organique liquide.
- et poursuivre l'opération de brassage après pulvérisation, la durée de cette opération déterminant la grosseur des granules formés.

2. Procédé de fabrication d'un engrais selon la revendication 1, **caractérisé en ce que** la masse pulvérulente est constituée de matières organiques de différentes natures.

3. Procédé de fabrication d'un engrais selon l'une quelconque des revendications précédentes, **caractérisé en ce que** le brassage est obtenu par roulage de la matière organique sur elle-même.

4. Procédé de fabrication d'un engrais selon l'une quelconque des revendications précédentes, **caractérisé en ce que** l'introduction du liant liquide dans la masse de matières organiques consiste à pulvériser ce liant sur ladite masse, le brassage de cette masse facilitant l'introduction du liant dans cette dernière.

5. Procédé de fabrication d'un engrais selon l'une quelconque des revendications précédentes, **caractérisé en ce que** le liant liquide est une vinasse de jus de betterave.

6. Procédé de fabrication d'un engrais selon l'une quelconque des revendications précédentes, **caractérisé en ce qu'**il consiste après l'opération de brassage à séparer les granules les unes des autres par brassage du produit, ce brassage étant opéré par mouvements ascendants et descendants combinés à un mouvement de roulage du produit sur lui-même,.

7. Procédé de fabrication d'un engrais selon la revendication 6, **caractérisé en ce qu'**il consiste après l'opération de séparation à densifier les granules, cette densification s'opérant par séchage en surface et roulage des granules sur eux-mêmes.

8. Procédé de fabrication d'un engrais selon la revendication 7, **caractérisé en ce qu'**il consiste après l'opération de densification à sécher le produit granulaire à coeur.

9. Procédé de fabrication d'un engrais selon la revendication 8, **caractérisé en ce que** le séchage est opéré de manière étagée.

10. Installation pour la fabrication d'un engrais organique se présentant sous la forme de granules sphériques par la mise en oeuvre du procédé selon l'une quelconque des revendications précédentes, **caractérisée en ce qu'**elle comprend :
- un mélangeur à cuve (2) en relation avec dispositif de délivrance des différents ingrédients entrant dans la composition de l'engrais, la cuve dudit mélangeur étant pourvue d'une ouverture avec trappe d'obturation utilisable pour l'introduction des produits à mélanger et l'extraction du mélange réalisé, ledit mélangeur (2) étant pourvu de plus d'une rampe d'aspersion (3) laquelle est en relation avec un circuit de distribution d'une vinasse de jus de betterave,
- un dispositif de séparation (12) des granules par brassage, disposé en aval du mélangeur à cuve (2), ce dispositif de séparation (12) étant constitué par une cuve tournante comportant une bouche d'entrée du produit à brasser et une bouche de sortie du produit brassé, ladite cuve étant pourvue de plus de saillies longitudinales, angulairement espacées, formant crans de préhension du produit granulaires lequel par ces saillies est prélevé par fraction à un niveau inférieur dans la cuve et est élevé à un niveau supérieur selon lequel l'inclinaison des saillies force son écoulement vers le niveau inférieur,
- au moins un dispositif densificateur (14) disposé en aval du dispositif de séparation, ce dispositif densificateur (14) étant constitué par une cuve entraînée en rotation selon son axe longitudinal de symétrie, comportant une bouche d'entrée du produit à densifier et une bouche de sortie du produit densifié, la dite cuve comportant des saillies internes formant crans de préhension le dispositif densificateur (14) pouvant être associé à un moyen de production d'un flux d'air et de propulsion de cet air chaud dans la cuve depuis la bouche d'entrée vers la bouche de sortie,
- au moins une enceinte de séchage (15) réalisant un séchage étagé du produit granulaire, ladite enceinte comportant une bouche d'entrée du produit à sécher et une bouche de sortie du produit sec.

11. Installation selon la revendication 10, **caractérisée en ce que** la cuve du mélangeur (2) est fixe et que ledit mélangeur est doté d'un organe de mélange (10) constitué par un arbre rotatif, axial à la cuve interne, à cette dernière, accouplé à un organe moteur d'entraînement, ledit arbre, dans la cuve étant doté d'une série de pales portées par des bras radiaux et destinées, par rotation de l'arbre à pénétrer dans le produit et mélanger ce dernier, ledit mélangeur étant doté de plus dans la cuve d'une rampe de pulvérisation (3) connectée à un circuit de délivrance d'une vinasse de jus de betterave.

12. Installation selon la revendication 10 ou la revendication 11 **caractérisée en ce que** l'enceinte de séchage (15) est constituée par une cuve tubulaire, entraînée en rotation selon son axe longitudinal de symétrie, comportant une bouche d'entrée du produit à sécher et une bouche de sortie du produit séché, ladite cuve comportant des pales internes radiales, longitudinales pour brasser et aérer le produit granulaire.

13. Installation selon les revendications 10, 11, 12, prises ensemble, **caractérisée en ce que** la cuve du dispositif de séparation (12), la cuve du dispositif densificateur (14) et la cuve de l'enceinte de séchage (15) sont inclinées vers le bas depuis la bouche d'entrée du produit granulaire de façon que le produit granulaire puisse s'écouler par gravité de la bouche d'entrée vers la bouche de sortie.

14. Installation selon l'une quelconque des revendications 10 à 13, **caractérisée par** deux enceintes de séchage (15), disposées l'une à la suite de l'autre la température de séchage dans l'enceinte amont étant inférieure à la température de séchage dans l'enceinte aval.

15. Installation selon l'une quelconque des revendications 10 à 14, **caractérisée par** une trémie tampon (8) disposée entre le dispositif de délivrance des produits à mélanger et le mélangeur à cuve (2).

16. Installation selon la revendication 15, **caractérisée en ce que** le dispositif de délivrance du produit en vrac comprend au moins une enceinte de stockage (1) de ce produit, pourvue d'une bouche d'extraction du produit équipée d'un organe de distribution (4) et une trémie peseuse (5) dans laquelle s'écoule le produit délivré par l'organe de distribution (4) en vue d'y être pesé avant introduction dans la trémie tampon (8).

17. Installation selon la revendication 11, **caractérisée en ce que** le circuit de délivrance d'une vinasse de jus de betterave est constitué par une enceinte étanche de stockage pourvue d'un orifice de délivrance du produit associé à un organe de délivrance.

18. Installation selon la revendication 17, **caractérisée en ce que** le circuit de délivrance de la vinasse de jus de betterave comprend une trémie tampon (9), cette trémie tampon étant utilisable pour l'alimentation de la rampe de pulvérisation (3).

19. Installation selon la revendication **caractérisée par** une trémie tampon (13) disposée entre le mélangeur à cuve (2) et le dispositif de séparation (12).

20. Granule d'engrais réalisé à partir d'au moins une matière organique, se présentant sous une forme sphérique, **caractérisé en ce qu'**il est revêtu d'une couche de liant organique.

21. Granule d'engrais selon la revendication 21, **caractérisé en ce que** le liant organique est une vinasse sèche de jus de betterave.
